# EUROPÄISCHE PATENTANMELDUNG

(11) **EP 4 786 250 A1**
(43) Veröffentlichungstag der Anmeldung: **05.08.2026**
(21) Anmeldenummer: 26152170.2
(22) Anmeldetag: 15.01.2026
(51) Int. Cl.: B60L 15/02, B60L 15/20, H02P 21/20, H02P 23/14

(54) **ADAPTIVES REGELUNGSVERFAHREN FÜR EINEN FAHRANTRIEB EINES FAHRZEUGS**

(30) Priorität: 28.01.2025 DE 102025103023
(71) Anmelder: Jungheinrich AG, 22047 Hamburg (DE)
(72) Erfinder: SCHWERING, Tobias, 22047 Hamburg (DE); LÖCHEL, Jana, 22047 Hamburg (DE)
(74) Vertreter: Weickmann & Weickmann PartmbB

(57) **Zusammenfassung**

Die vorliegende Erfindung betrifft ein adaptives Regelungsverfahren für einen Fahrantrieb eines Fahrzeugs, insbesondere eines fahrerlosen Transportfahrzeugs, in Form einer Synchronmaschine mit einem Rotor und einem Stator, umfassend ein Bewegen eines Statorfelds ohne unmittelbare Abhängigkeit von einer Rotorposition mit einer gewünschten Geschwindigkeit, ein Erfassen eines Lastwinkels der Synchronmaschine mittels eines Erfassungselements zur Erfassung eines Rotorwinkels, ein Anwenden eines adaptiven Strom-Stellwerts mittels welchem abhängig von dem Lastwinkel zwischen Rotor und Statorfeld ein Motorstrom gesetzt wird, wobei wenigstens abschnittsweise bei steigendem Lastwinkel der Motorstrom erhöht wird, ein Übersetzen einer dem gesetzten Motorstrom entsprechenden Spannung in Pulsweitenmodulation-Werte für die Phasen der Synchronmaschine, und ein Verstärken der übersetzten Werte auf eine notwendige Leistung und Versorgen der Synchronmaschine damit.

## Beschreibung

Die vorliegende Erfindung betrifft ein adaptives Regelungsverfahren für einen Fahrantrieb eines Fahrzeugs, insbesondere eines fahrerlosen Transportfahrzeugs, in Form einer Synchronmaschine mit einem Rotor und einem Stator, eine Regelungseinrichtung, welche dazu eingerichtet ist, ein derartiges Verfahren durchzuführen, sowie ein Fahrzeug mit einem Fahrantrieb in Form einer Synchronmaschine sowie einer derartigen Regelungseinrichtung.

Es sind unterschiedliche Typen von Fahrzeugen bekannt, welche mittels Elektromotoren in Form von an sich bekannten Synchronmaschinen mit Rotoren und Statoren angetrieben werden, welche wiederum insbesondere durch einen Wechselrichter angesteuert werden. Derartige Konfigurationen kommen insbesondere in fahrerlosen Transportfahrzeugen zum Einsatz, welche teilweise auch als autonome Roboter, AMRs (autonomous mobile robots) oder AGVs (autonomous guided vehicles) bezeichnet werden und sich in Punktrotationen, Geradeaus- und Kurvenfahrten auf einem entsprechenden Fahruntergrund bewegen können. Ferner sind Varianten derartiger Fahrzeuge bekannt, welche sich mittels omnidirektionaler Antriebe in jede beliebige Richtung bewegen können.

Durch relativ hohe Nutzlasten und hochdynamische Fahrsituationen ergeben sich entsprechende Ansprüche an die Fahrantriebe derartiger Fahrzeuge, beispielsweise hohe Leistungen beim Anfahren, für welche unterschiedliche Regelungstechniken vorgeschlagen worden sind, um die entsprechenden Synchronmaschinen in geeigneter Weise zu betreiben.

Insbesondere sind hierbei feldorientierte Regelungen zum Einsatz gekommen, in welchen als Eingangsgröße eine Differenz aus einer Soll- und einer Ist-Geschwindigkeit verwendet wurde, wobei als Ausgangsgröße dann ein Sollstrom für den Betrieb eines entsprechenden Motors ausgegeben wurde. Dieses Grundprinzip wurde teilweise mit Erweiterungen wie einem Beobachter oder einer adaptiven Anpassung von Parametern ergänzt, um die Leistungsfähigkeit derartiger Systeme bei sehr dynamischer, ggf. zeitvarianter Regelstrecke zu erhöhen. Alternativ sind Open-Loop-Stromregelungen vorgeschlagen worden, welche einen festen Stromvektor mit einer Zielgeschwindigkeit bewegen.

Hierbei zeigen sich jedoch in beiden der eben genannten und im Stand der Technik verfolgten Ansätze jeweilige Nachteile. Beispielsweise verwendet eine rein feldorientierte Regelung einen Proportional-Integral-Differential (PID)-Regler für Ströme senkrecht zur Richtung des Rotors und somit zur Momentregelung. Ist hierbei die Regelstrecke zeitvariant, so wird eine Parametrierung davon sehr schwierig, um in allen Situationen stabil, jedoch ausreichend dynamisch zu sein. Wird andererseits die feldorientierte Regelung um Kompensationssysteme erweitert, so steigt damit der Rechenaufwand stark an und die Zahl der zu berücksichtigen Parameter nimmt ebenfalls erheblich zu. Dem hingegen sind Open-Loop-Regelungen relativ einfach aufgebaut, die gewünschte Dynamik der oben beschriebenen Anwendungsfälle ist mit Ihnen jedoch kaum zu erreichen. Ferner können in Open-Loop-Regelungen erhebliche Blindströme auftreten, die zu einer geringen Betriebseffizienz entsprechender Antriebe führen.

Dementsprechend ist es die Aufgabe der vorliegenden Erfindung, ein Regelungsverfahren für einen Fahrantrieb eines Fahrzeugs bereitzustellen, welches sich durch eine hohe Dynamik und eine zuverlässige Betriebsweise sowie einen optimierten Energieverbrauch auszeichnet. Hierbei ist insbesondere im Anwendungsfall von fahrerlosen Transportfahrzeugen oder mobilen Robotern eine minimale Abweichung von einem geplanten Pfad zu erzielen, um Durchfahrten durch Engstellen zu ermöglichen. Gleichzeitig soll bei begrenzter Rechenleistung eine optimale Energieeffizienz erzielt werden, um die Energiespeicher entsprechender Fahrzeuge zu schonen. Weiterhin ist zu beachten, dass im hier beschriebenen Anwendungsfall aufgrund des schwierig zu simulierenden dynamischen Verhaltens von Gummirollen auf verschiedenen Untergründen die Regelstrecke sehr schwer zu simulieren ist und beispielsweise auch an derartigen Fahrzeuge typischerweise vorgesehene Schlepprollen, also Rollen ohne Lenkfunktion, durch eine vorangehende Bewegung für eine momentane Bewegung ungünstig gedreht sein können, sodass eine zeitvariante Beeinflussung auftreten kann, während sich die Schlepprollen im Rahmen der momentanen Bewegung ausrichten. Zudem können statische Reibungen, welche überwunden werden müssen, relativ groß sein, sobald ein Rad eines derartigen Fahrzeugs zum Stillstand gekommen war.

Um die oben diskutierten Nachteile des Stands der Technik auszuräumen und die eben beschriebene Aufgabe zu lösen, wird erfindungsgemäß ein adaptives Regelungsverfahren für einen Fahrantrieb eines Fahrzeugs, insbesondere eines fahrerlosen Transportfahrzeugs, in Form einer Synchronmaschine mit einem Rotor und einem Stator vorgeschlagen, umfassend ein Bewegen eines Statorfelds ohne unmittelbare Abhängigkeit von einer Rotorposition mit einer gewünschten Geschwindigkeit, ein Erfassen eines Lastwinkels der Synchronmaschine mittels eines Erfassungselements zur Erfassung eines Rotorwinkels, ein Anwenden eines adaptiven Strom-Stellwertes, mittels welchem abhängig von dem Lastwinkel zwischen Rotor und Statorfeld ein Motorstrom gesetzt wird, wobei wenigstens abschnittsweise bei steigendem Lastwinkel der Motorstrom erhöht wird, ein Übersetzen einer dem gesetzten Motorstrom entsprechenden Spannung in Pulsweitenmodulation-Werte für die Phasen der Synchronmaschine, und ein Verstärken der übersetzten Werte auf eine notwendige Leistung und Versorgen der Synchronmaschine damit.

Durch das vorgeschlagene erfindungsgemäße Verfahren kann die Regelgüte in dem beschriebenen Anwendungsfall erhöht werden, ohne dass zusätzlicher Rechenaufwand erzeugt wird, und das zugrunde liegende System wird vereinfacht, anstatt dass eine zusätzliche Stufe in eine feldorientierte Regelung integriert werden würde. Hierzu werden physikalische Eigenschaften des verwendeten Motors selbst ausgenutzt, um in besonders anspruchsvollen Momenten die Lastregelung vorzunehmen, anstatt dass auf einen Proportional-Integral-Regler zurückgegriffen werden würde.

Insbesondere wird erfindungsgemäß der Stromvektor nicht wie in einer feldorientierten Regelung auf einem festen Winkel zum Rotor eingestellt, sondern unabhängig von der Rotorposition mit der gewünschten Geschwindigkeit bewegt. Somit bestimmt der variable Lastwinkel und nicht mehr der geregelte Strom das Moment des Motors, wobei andererseits gleichzeitig die Regelung der Länge des Stromvektors wegfällt. Dieser muss dementsprechend ohne Anpassung auf den bei maximalem Moment notwendigen Wert gesetzt werden, welcher sich dann lastabhängig in Blind- und Effektivanteile aufteilt. Dieses Vorgehen kann jedoch hohe Verluste in der Leistungselektronik und dem Motor zur Folge haben.

Um dieses Problem zu umgehen, wird erfindungsgemäß auf den adaptiven Strom-Stellwert zurückgegriffen, welcher beispielsweise durch eine feste Kennlinie dargestellt sein kann, welche weiter unten noch im Einzelnen diskutiert werden wird. Somit kann bei geeigneter Wahl einer entsprechenden Kennlinie trotz der vereinfachten Regelung der Motorstrom bei sehr geringer Last reduziert werden, während der Lastwinkel zur Ausregelung der hohen Dynamik dient. Hierbei kann zur Berechnung und Nachführung der Strom- und Spannungsvektoren direkt auf Implementierungsansätze aus der feldorientierten Regelung zurückgegriffen werden. Weiterhin kann das erfindungsgemäße Verfahren ein Begrenzen des Lastwinkels auf Werte kleiner oder gleich π/2 umfassen, um zu verhindern, dass der Lastwinkel zu groß wird und der Strom-Stellwert sein Maximum überschreitet, da ab diesem Moment das Motormoment wieder abnehmen und die Regelung verloren gehen würde. Dementsprechend ist gemäß der vorliegenden Erfindung der Begriff des "Betriebs ohne unmittelbare Abhängigkeit" derart zu verstehen, dass in diesem zunächst keine derartige Begrenzung des Lastwinkels vorgesehen ist, da stets ein Lastwinkel in einem unproblematischen Bereich hinsichtlich der Funktionsweise des Motors zu erwarten ist.

Weiterhin kann das Verfahren ein Messen der jeweiligen Ströme an den Phasen des Motors als Eingangsgröße für die Bestimmung der dem gesetzten Strom entsprechenden Spannung umfassen.

Wie bereits weiter oben angedeutet, kann der adaptive Strom-Stellwert durch eine Kennlinie definiert sein, welche insbesondere aus einem Minimalstrom, einem linearen Bereich zwischen zwei vorgegebenen Lastwinkeln und einem Maximalstrom bei großen Lastwinkeln besteht. Hierdurch kann trotz der vereinfachten Regelung der Strom bei sehr geringer Last reduziert werden, während der Lastwinkel die hohe Dynamik ausregelt.

Da die erfindungsgemäße adaptive Stromregelung insbesondere bei Fahrmanövern mit hoher Dynamik des geforderten Drehmoments Vorteile hat, also insbesondere bei einem Anfahren und bei sehr niedrigen Geschwindigkeiten, kann es in bestimmten Betriebssituationen vorteilhaft sein, abhängig von wenigstens einem Betriebsparameter des Fahrzeugs zu einer feldorientierten Regelung umzuschalten, in welcher ein Sollstrom anhand einer Differenz zwischen einer Soll- und einer Ist-Geschwindigkeit des Fahrzeugs ermittelt wird. Hierbei sind Langsamfahrten in der Praxis einerseits besonders am Ende eines Fahrmanövers wichtig, um eine entsprechende Zielposition möglichst genau zu treffen, und andererseits anspruchsvoll, da vorrübergehend statische Reibung auftritt. Durch die erfindungsgemäße Stromregelung kann der relativ geringen Effizienz durch Blindströme durch das angesprochene Umschalten entgegengewirkt werden, wobei insbesondere Ströme in Richtung des Rotors und senkrecht zu diesem separat geregt werden können, wobei insbesondere der Strom in Richtung des Rotors auf null geregelt werden kann.

Um bei einem derartigen Umschalten von der adaptiven Stromregelung zu der feldorientierten Regelung große Regelausschläge und damit eine diskontinuierliche Bewegung des entsprechenden Fahrzeugs zu vermeiden, kann ferner vorgesehen sein, bei einem Umschalten zu der feldorientierten Regelung den Wert des Stroms senkrecht zu dem Rotor anhand des Effektivanteils des Stroms vorzuladen. Dieser Effektivanteil des Stroms kann dementsprechend in diesem Zusammenhang in dem adaptiven Regelungsverfahren berechnet werden und der entsprechende Regler für die feldorientierte Regelung kann mit diesem Wert vorgeladen werden. Um andererseits in die andere Richtung von der feldorientierten Regelung zu der adaptiven Stromreglung umzuschalten, kann das eben beschriebene Prinzip gerade umgekehrt angewendet werden, wobei ein derartiges Umschalten von der feldorientierten Regelung zu der adaptiven Stromregelung insbesondere bei geringer Geschwindigkeit, insbesondere kleiner als 0,1 m/s, weiter insbesondere kleiner als 0,05 m/s, noch weiter insbesondere kleiner als 0,03 m/s und/oder geringer Last des Fahrzeugs, insbesondere kleiner 20% eines Maximalmoments, weiter insbesondere kleiner 12% des Maximalmoments, noch weiter insbesondere kleiner 8,5% des Maximalmoments vorgenommen wird, sodass der Stromvektor der Minimalstrom aus der adaptiven Reglung ist. Aus diesem Stromvektor und dem Effektivstrom, welcher zuvor in der feldorientierten Regelung verwendet wurde, kann nun ein neuer Startwinkel berechnet werden, mit welchem die Stromregelung vorgeladen werden kann.

Dementsprechend kann durch die vorliegende Erfindung bei kritischen Manövern, wie beispielsweise einem Anfahren mit unbekannter Anfangsposition von Schlepprollen und langsamer Geschwindigkeit, die Regelabweichung stark reduziert werden, während der hierfür benötigte Rechenaufwand ebenfalls reduziert und eine hohe Stabilität der Regelung erzielt wird. Auch bei einer Überlast geht hierbei die Regelung nicht verloren und die Gesamt-Energieeffizienz reduziert sich in realen Anwendungsfällen nicht wesentlich, da in entsprechenden Betriebssituationen zu der feldorientierten Regelung mit hoher Effizienz umgeschaltet werden kann. Ferner kann durch eine Reduktion der Ströme bei geringen Lastwinkeln eine starke Erhöhung der Effizienz erzielt werden.

Zur Implementierung eines entsprechenden Verfahrens schlägt die vorliegende Erfindung ferner eine Regelungseinrichtung für einen Fahrantrieb eines Fahrzeugs, insbesondere eines führerlosen Transportfahrzeugs, vor, welche dazu eingerichtet ist, ein derartiges Verfahren durchzuführen, und eine Raumzeigermodulation zum Bewegen des Statorfelds, ein Erfassungselement zum Erfassen des Lastwinkels der Synchronmaschine, eine Setzeinheit zum Anwenden des adaptiven Strom-Stellwerts und eine Leistungsstufe zum Verstärken der an den Fahrantrieb zu liefernden Spannung umfasst.

Hierbei kann in der oben beschriebenen Weise ferner ein Geschwindigkeitsbegrenzer zum Begrenzen des Lastwinkels und/oder eine Strom-Messvorrichtung zum Messen der jeweiligen Ströme an den Phasen des Motors vorgesehen sein, und die Regelungseinrichtung kann ferner wenigstens eine Erfassungseinrichtung zum Erfassen wenigstens eines Betriebsparameters des Fahrzeugs und eine Umschalteinrichtung zum Umschalten zwischen der adaptiven Stromregelung und einer feldorientierten Regelung umfassen, um die ebenfalls bereits mehrfach beschriebene Effizienzsteigerung durch das entsprechende Umschalten zwischen den beiden Betriebsmodi erzielen zu können.

Weiterhin betrifft die Erfindung ein Fahrzeug, insbesondere ein fahrerloses Transportfahrzeug, mit einem Fahrantrieb in Form wenigstens einer Synchronmaschine mit einem Rotor und einem Stator sowie einer erfindungsgemäßen Regeleinrichtung der eben beschriebenen Art.

Hierbei kann das Fahrzeug wenigstens eine von dem Fahrantrieb angetriebene Antriebsrolle und wenigstens eine ungelenkte und nicht-angetriebene Schlepprolle umfassen, beispielsweise zwei Antriebrollen und vier Schlepprollen, in an sich bekannten grundsätzlichen Implementierungen derartiger fahrerloser Transportfahrzeuge bzw. mobiler Roboter.

Weiterhin sei darauf hingewiesen, dass die Regelungseinrichtung mit einer zentralen Steuereinheit des Fahrzeugs betriebsmäßig gekoppelt und/oder wenigstens teilweise mit ihr integriert sein kann, das heißt, dass die Regelungseinrichtung entweder als eigenes Modul an die zentrale Steuereinheit des Fahrzeugs ankoppelbar sein kann oder dass wenigstens einige der oben beschriebenen Komponenten des Regelungssystems bereits durch die zentrale Steuereinheit implementiert sein können.

Weitere Merkmale und Vorteile der vorliegenden Erfindung werden aus der nachfolgenden Beschreibung eines Ausführungsbeispiels davon noch deutlicher, wenn diese zusammen mit den beiliegenden Figuren betrachtet wird. Diese zeigen im Einzelnen:
- Figur 1: ein Regelungsdiagramm einer feldorientierten Regelung, welche in einem erfindungsgemäßen Verfahren selektiv eingesetzt werden kann;
- Figur 2: ein Regelungsdiagramm einer adaptiven Stromregelung gemäß der vorliegenden Erfindung; und
- Figur 3: eine schematische Darstellung eines fahrerlosen Transportfahrzeugs, welches dazu eingerichtet ist, ein erfindungsgemäßes Regelungsverfahren anzuwenden.

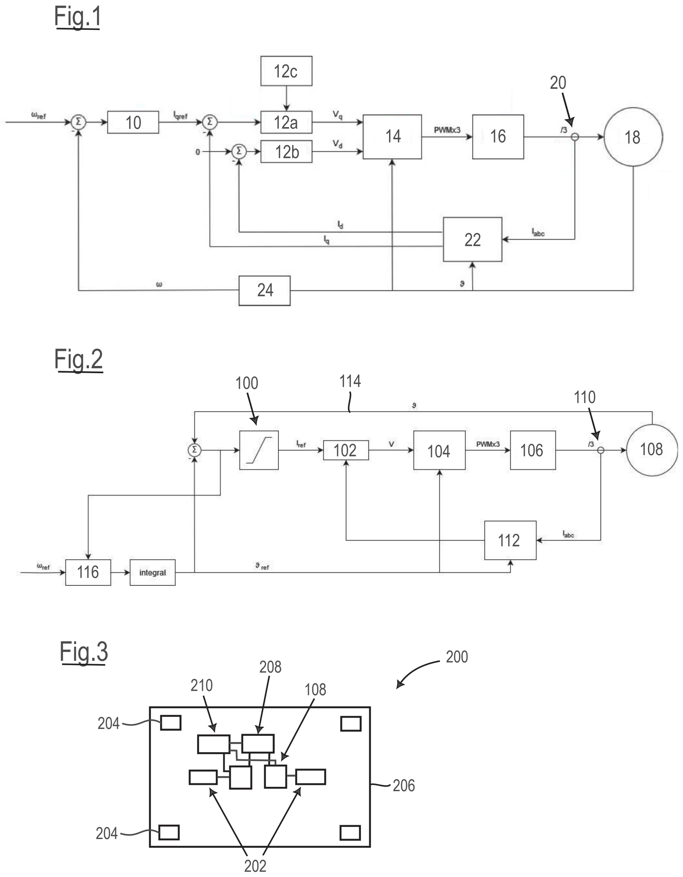

In Figur 1 ist nun in der üblichen Darstellungsweise ein Regelungsdiagramm für eine feldorientierte Regelung dargestellt, welche in einem erfindungsgemäßen Verfahren bzw. einem erfindungsgemäßen Fahrzeug alternativ zu dem im Folgenden im Zusammenhang mit Figur 2 beschriebenen adaptiven Stromregelungsverfahren zum Einsatz kommen kann.

Hierbei wird ein Geschwindigkeitsregler 10 eingesetzt, welcher an seinem Eingang die Differenz aus Soll- und Ist-Geschwindigkeit erhält und an seinem Ausgang einen Soll-Strom ausgibt. Im Folgenden sind separate Regler 12a und 12b für Ströme in Richtung des Rotors beziehungsweise senkrecht zu diesem vorgesehen, wobei insbesondere der Strom in Richtung des Rotors beispielsweise auf null geregelt werden kann, da er kein Drehmoment erzeugt. Alternativ könnte auch ein Setzen des Stroms auf eine Kennlinie durchgeführt werden, um höhere Geschwindigkeiten oder eine bessere Effizienz zu erzielen. Ferner sei an dieser Stelle darauf hingewiesen, dass der Regler 12a bei einem Umschalten zu der hier veranschaulichten feldorientierten Regelung anhand des Effektivanteils des Strom vorgeladen werden kann, wie durch den Punkt 12c angedeutet.

Die jeweiligen Ausgangsgrößen dieser Regler sind hierbei die Stellspannungen parallel und senkrecht zum Rotor, welche an eine Raumzeigermodulation 14 mit inverser Park and Clark Transformation ausgegeben werden, welche wiederum die Spannungen im Koordinatensystem des Rotors in PulsweitenmodulationsWerte für die drei Phasen des Motors übersetzt.

Hieran schließt sich eine Leistungsstufe 16 an, welche im hier dargestellten Beispiel aus drei MOSFET-Halbbrücken für die Phasenanschlüsse des Motors mit deren Gatetreiber gebildet ist. An dieser Stelle werden die entsprechenden Signale von ihrem Logikpegel auf die notwendige Leistung verstärkt und an den Motor 18 ausgegeben. Dieser liegt als Synchronmaschine vor und gemäß Punkt 20 des Diagramms aus Figur 1 werden Strommessungen an den drei Phasen des Motors durchgeführt, wobei die hier gemessenen Ströme nach einer Transformation in das Koordinatensystem des Rotors durch eine Park and Clarke Transformation an Punkt 22 als Eingangsgrößen der Stromregler 12a und 12b dienen. Hierbei ist das eben beschriebene Vorgehen zur Strommessung beispielhaft zu verstehen, und könnte auch in einer anderen Weise durchgeführt werden, beispielsweise an Low-Side-MOSFETs einer Halbbrücke, was technisch anspruchsvoller ist als eine direkte Messung an Phasenanschlüssen eines Motors, jedoch ggf. günstiger hinsichtlich der benötigten Hardware.

Weiterhin sie darauf hingewiesen, dass eine Winkelmessung eines integrierten Erfassungselements der Rotorposition gemäß Punkt 24 in Figur 1 als Eingangsgröße für die eben angesprochene Koordinatentransformation und abgeleitet als Ist-Wert für die Geschwindigkeitsregelung des Geschwindigkeitsreglers 10 dient.

In Figur 2 ist nun in einer ähnlichen Darstellungsform ein erfindungsgemäßes adaptives Regelungsverfahren dargestellt, welches auf einer Open-Loop-Stromregelung basiert jedoch im Folgenden beschriebenen Unterschiede zu einer reinen Open-Loop-Regelung aufweist.

Zunächst einmal ist ein adaptiver Strom-Stellwert 100 vorgesehen, in welchen abhängig von einem im Folgenden beschriebenen Lastwinkel zwischen Rotor und Statorfeld der Strom gesetzt wird. Bei einem geringen Lastwinkel und damit auch geringer Last kann hierin ein kleinerer Strom verwendet werden, um die Verlustleistung zu reduzieren, während bei einem größeren Lastwinkel durch ein zunehmendes Lastmoment am Motor auch der Strom erhöht wird.

Hierbei wird im gezeigten Beispiel eine feste Kennlinie verwendet, welche in Figur 2 angedeutet und derart ausgeführt ist, dass zunächst ein konstanter Minimalstrom angesetzt wird, dann eine lineare Zunahme zwischen zwei vorbestimmten Lastwinkeln und sich hieran anschließend ein konstanter Maximalstrom bei großen Lastwinkeln.

Der von dem adaptiven Strom-Stellwert ausgegebene Referenzstrom wird bei Punkt 102 in eine Stellspannung übersetzt, welche in ähnlicher Weise wie oben im Rahmen der feldorientierten Regelung beschrieben mittels einer Raumzeigermodulation 104 in Pulsweitenmodulationswerte für die Phasen des Motors umgewandelt wird, welche anschließend durch die Leistungsstufe 106 für den Motor 108 verstärkt werden.

Hierbei sei darauf hingewiesen, dass wenngleich für die Figuren 1 und 2 unterschiedliche Bezugszeichen verwendet worden sind, so doch die entsprechenden Komponenten bei geeigneter Implementierung wenigstens teilweise identisch sein können und beispielsweise die Motoren 18 und 108 selbstverständlich dieselbe Synchronmaschine bezeichnen.

Weiterhin sein darauf hingewiesen, dass die bei Punkt 110 gemessenen Ströme nach einer Transformation gemäß Punkt 112 als Eingangsgröße zum Punkt 102 zurückgegeben werden, während der ebenfalls in dem Motor 108 ermittelte Rotorwinkel gemäß Zweig 114 als Eingangsgröße für den oben beschriebenen adaptiven Strom-Stellwert 100 dient.

Ferner sei darauf hingewiesen, dass in der Regelung gemäß Figur 2 ein Geschwindigkeitsbegrenzer 116 vorgesehen ist, welcher den Lastwinkel auf einen Wert von kleiner oder gleich π/2 begrenzt, da das Motormoment bei einem Überschreiten dieses Werts wieder abnehmen würde und damit die Regelung verloren ginge. Wie bereits angesprochen, ist der Motor 108 in dem hier dargestellten Regelungskonzept mit einem Erfassungselement zur Erfassung des Rotorwinkels versehen, welcher mittels des Zweigs 114 als Eingang für die Regelung verwendet wird.

In Figur 3 ist zuletzt rein schematisch ein fahrerloses Transportfahrzeug gemäß der vorliegenden Erfindung dargestellt, welches dazu eingerichtet ist, das erfindungsgemäße Regelungsverfahren durchzuführen. Hierbei umfasst das fahrerlose Transportfahrzeug bzw. der mobile Roboter 200 zwei durch jeweilige Synchronmaschinen 108 angetriebene Räder 202 und vier nicht angetriebene Schlepprollen 204, wobei die oben beschriebene Regelung für jedes der Räder 202 durchgeführt wird. Diese sind jeweils einem Fahrzeugkörper 206 zugeordnet, welcher insbesondere an seiner Oberseite eine hier nicht dargestellte Lastaufnahmeplattform umfassen kann, welche zur Aufnahme von Lasten in geeigneten Stationen vertikal verlagerbar sein kann. Indem jedes der angetriebenen Räder 202 durch eine eigene Synchronmaschine angetrieben wird, kann über die Differenz der Geschwindigkeiten davon das Fahrzeug gesteuert werden.

Zudem umfasst der mobile Roboter 200 eine zentrale Steuereinheit 208, welche den Betrieb davon steuert und dementsprechend auch das oben beschriebene erfindungsgemäße Regelungsverfahren wenigstens teilweise implementieren kann, wobei in diesem Zusammenhang ferner weitere Baugruppen 210 vorgesehen sein können, welche die übrigen Komponenten der erfindungsgemäßen Regelungseinrichtung implementieren, beispielsweise eine Leistungselektronik und ähnliches, welche die Motoren bzw. Fahrantriebe 108 mit entsprechend geregelter Leistung versorgen. Ferner sei darauf hingewiesen, dass es auch denkbar wäre, Teile der Funktionalität der zentralen Steuereinheit 208 in anderen Varianten von erfindungsgemäßen Fahrzeugen in eigenen externen Komponenten vorzusehen.

## Patentansprüche

1. Adaptives Regelungsverfahren für einen Fahrantrieb (108) eines Fahrzeugs (200), insbesondere eines fahrerlosen Transportfahrzeugs, in Form wenigstens einer Synchronmaschine mit einem Rotor und einem Stator, umfassend:
- Bewegen eines Statorfelds ohne unmittelbare Abhängigkeit von einer Rotorposition mit einer gewünschten Geschwindigkeit;
- Erfassen eines Lastwinkels der Synchronmaschine mittels eines Erfassungselements zur Erfassung eines Rotorwinkels;
- Anwenden eines adaptiven Strom-Stellwerts mittels welchem abhängig von dem Lastwinkel zwischen Rotor und Statorfeld ein Motorstrom gesetzt wird, wobei wenigstens abschnittsweise bei steigendem Lastwinkel der Motorstrom erhöht wird;
- Übersetzen einer dem gesetzten Motorstrom entsprechenden Spannung in Pulsweitenmodulation-Werte für die Phasen der Synchronmaschine; und
- Verstärken der übersetzten Werte auf eine notwendige Leistung und Versorgen der Synchronmaschine damit.

2. Verfahren nach Anspruch 1, ferner umfassend:
- Begrenzen des Lastwinkels auf Werte kleiner oder gleich ₁/2.

3. Verfahren nach einem der Ansprüche 1 und 2, ferner umfassend:
- Messen der jeweiligen Ströme an den Phasen des Motors als Eingangsgröße für die Bestimmung der dem gesetzten Strom entsprechenden Spannung.

4. Verfahren nach einem der vorhergehenden Ansprüche,
wobei der adaptive Strom-Stellwert durch eine Kennlinie definiert ist, welche aus einem Minimalstrom, einem linearen Bereich zwischen zwei iterativ gewählten Lastwinkeln und einem Maximalstrom bei großen Lastwinkeln besteht.

5. Verfahren nach einem der vorhergehenden Ansprüche, ferner umfassend:
- abhängig von wenigstens einem Betriebsparameter des Fahrzeugs, Umschalten zu einer feldorientierten Regelung, in welcher ein Sollstrom anhand einer Differenz zwischen einer Soll- und einer Ist-Geschwindigkeit des Fahrzeugs ermittelt wird.

6. Verfahren nach Anspruch 5,
wobei Ströme in Richtung des Rotors und senkrecht zu diesem separat geregelt werden.

7. Verfahren nach Anspruch 6,
wobei bei einem Umschalten zu der feldorientierten Regelung der Wert des Stroms senkrecht zu dem Rotor anhand des Effektivanteils des Stroms vorgeladen wird.

8. Verfahren nach einem der Ansprüche 5 bis 7,
wobei das Umschalten von der feldorientierten Regelung zu der adaptiven Stromregelung bei geringer Geschwindigkeit, insbesondere kleiner als 0,1 m/s, weiter insbesondere kleiner als 0,05 m/s, noch weiter insbesondere kleiner als 0,03 m/s und/oder geringer Last des Fahrzeugs, insbesondere kleiner 20% eines Maximalmoments, weiter insbesondere kleiner 12% des Maximalmoments, noch weiter insbesondere kleiner 8,5% des Maximalmoments vorgenommen wird.

9. Regelungseinrichtung für einen Fahrantrieb (108) eines Fahrzeugs (200), insbesondere eines fahrerlosen Transportfahrzeugs, welche dazu eingerichtet ist, ein Verfahren nach einem der vorhergehenden Ansprüche durchzuführen, umfassend:
- eine Raumzeigermodulation zum Bewegen des Statorfelds;
- ein Erfassungselement (114) zum Erfassen des Lastwinkels der wenigstens einen Synchronmaschine;
- eine Setzeinheit (100) zum Anwenden des adaptiven Strom-Stellwerts;
- eine Leistungsstufe (106) zum Verstärken der an den Fahrantrieb zu liefernden Spannung.

10. Regelungseinrichtung nach Anspruch 9, ferner umfassend:
- einen Geschwindigkeitsbegrenzer (116) zum Begrenzen des Lastwinkels.

11. Regelungseinrichtung nach Anspruch 9 oder 10, ferner umfassend:
- eine Strom-Messvorrichtung (110) zum Messen der jeweiligen Ströme an den Phasen des Motors.

12. Regelungseinrichtung nach einem der Ansprüche 9 bis 11, ferner umfassend:
- wenigstens eine Erfassungseinrichtung zum Erfassen wenigstens eines Betriebsparameters des Fahrzeugs; und
- eine Umschalteinheit zum Umschalten zwischen der adaptiven Stromregelung und einer feldorientierten Regelung.

13. Fahrzeug (200), insbesondere fahrerloses Transportfahrzeug, mit einem Fahrantrieb (108) in Form wenigstens einer Synchronmaschine mit einem Rotor und einem Stator sowie einer Regelungseinrichtung nach einem der Ansprüche 9 bis 12.

14. Fahrzeug (200) nach Anspruch 13,
umfassend wenigstens eine von dem Fahrantrieb (108) angetriebene Antriebsrolle (202) und wenigstens eine ungelenkte und nicht-angetriebene Schlepprolle (204).

15. Fahrzeug nach Anspruch 13 oder Anspruch 14,
wobei die Regelungseinrichtung mit einer zentralen Steuereinheit (208) des Fahrzeugs (100) betriebsmäßig gekoppelt und/oder wenigstens teilweise mit ihr integriert ist.
